# EUROPÄISCHE PATENTSCHRIFT

(11) **EP 0 319 842 B1**
(45) Veröffentlichungstag und Bekanntmachung des Hinweises auf die Patenterteilung: **10.08.1994**
(21) Anmeldenummer: 88120048.9
(22) Anmeldetag: 01.12.1988
(51) Int. Cl.: F16C 33/64

(54) **Verfahren zur Herstellung eines Wälzlagers**
Method of producing a bearing
Procédé de réalisation d'un palier à roulements

(30) Priorität: 10.12.1987 DE 3741861
(43) Veröffentlichungstag der Anmeldung: 14.06.1989
(73) Patentinhaber: INA Wälzlager Schaeffler KG, 91063 Herzogenaurach (DE)
(72) Erfinder: Kirsch, Reinhard, Dipl.-Ing., D-8552 Höchstadt (DE)

(56) Entgegenhaltungen:
- DE-A- 3 248 634
- DE-A- 3 436 242
- FR-A- 973 265
- FR-A- 1 475 124
- FR-A- 2 537 896
- GB-A- 121 132
- GB-A- 1 107 088
- US-A- 3 734 583
- US-A- 4 196 947

## Beschreibung

Die Erfindung bezieht sich auf ein Verfahren zur Herstellung eines Wälzlagers, dessen Laufringe jeweils durch Rundbiegen eines Abschnittes von Band- bzw. Stabmaterial erzeugt werden, welches im wesentlichen einen rechteckigen Querschnitt und an einer Begrenzungsfläche eine Längsnut in Form einer Wälzkörperlaufbahn aufweist.

Ein derartiges Verfahren ist aus den Dokumenten GB-A-1 107 088 und DE-A-3 248 634 bekannt. Zum Herstellen eines Wälzlagerlaufringes ist hier eine Biegevorrichtung mit mindestens einer in die Längsnut des Ausgangsmaterials eingreifenden Profilrolle erforderlich, um eine Veränderung der Längsnut durch den Biegevorgang zu vermeiden. Nachteilig ist, daß eine für die Herstellung eines Außenlaufrings mit innenliegender Wälzkörperlaufbahn eingerichtete Biegevorrichtung für die Herstellung eines Innenlaufringes vollständig umgerüstet werden muß, da die Profilrolle nun von der anderen Seite auf die beim Innenlaufring außenliegende Wälzkörperlaufbahn einwirken muß. Das führt zu einer Verteuerung von Wälzkörperlaufringen dieser Art.

Als Ausgangspunkt wird häufig zu Coils aufgerolltes Bandmaterial verwandt. Durch das Aufrollen liegt die Längsnut entweder an der radial nach außen gerichteten oder an der radial nach innen gerichteten Begrenzungsfläche des Bandmaterials, wodurch es entweder nur zu einem Außenlaufring oder nur zu einem Innenlaufring verarbeitet werden kann, wenn die durch Biegen entgegen der durch das Aufrollen vorgegebenen Krümmungsrichtung entstehenden Veränderungen der Längsnut vermieden werden sollen. Daher muß aufgerolltes Bandmaterial sowohl für Außen- als auch für Innenlaufringe vorrätig gehalten werden, was zu einer weiteren Verteuerung von Wälzkörperlaufringen dieser Art führt.

Aus dem Dokument DE-A-3 436 242 ist ein Wälzlagerring bekannt, der mit einer äußeren Umfangsnut und einer inneren Umfangsnut sowohl als Außenlaufring, also auch als Innenlaufring eines Wälzlagers benutzt werden kann. Über die Art, wie dieser Ring hergestellt wird, enthält diese Entgegenhaltung jedoch keinerlei Hinweise.

Der Erfindung liegt die Aufgabe zugrunde, ein wirtschaftliches Verfahren für die serienmäßige Herstellung von Wälzlagerlaufringen zu schaffen, die sowohl als Innenlaufringe als auch als Außenlaufringe ausgebildet sein können.

Diese Aufgabe wird erfindungsgemäß dadurch gelöst, daß zur Vermeidung der Umrüstung der Biegevorrichtung und der Vorratshaltung von für Innenringe und Außenringe unterschiedlichem Ausgangsmaterial ein Band-bzw. Stabmaterial verwendet wird, welches an der der genannten Längsnut gegenüberliegenden Begrenzungsfläche eine zweite, mit der ersten identische und dazu spiegelsymmetrisch angeordnete Längsnut aufweist.

Durch die Verwendung des erfindungsgemäß ausgebildeten Ausgangsmaterials mit auf beiden Seiten gleichartigen Längsnuten entfällt das Umrüsten der Biegevorrichtung, weil das auf Umfangslänge des Laufringes geschnittene Ausgangsmaterial stets in gleicher Krümmungsrichtung sowohl zu einem Außenlaufring mit innenliegender Wälzkörperlaufbahn, als auch zu einem Innenlaufring mit außenliegender Wälzkörperlaufbahn gebogen werden kann. Es entfällt dadurch bei aufgerolltem Bandmaterial auch die teuere und gesonderte Vorratshaltung für Innen- und Außenlaufringe. Die so entstandenen Wälzlagerlaufringe können als geschlitzte Ringe verwandt werden, oder es können die sich gegenüberstehenden Enden eines jeden Wälzlagerlaufringes zu einem geschlossenen Ring verschweißt werden.

Dadurch, daß an dem Band- bzw. Stabmaterial mit im wesentlichen rechteckigem Querschnitt und einer Längsnut in Form einer Wälzkörperlaufbahn zum Herstellen eines erfindungsgemäßen Wälzlagerlaufrings gemäß der Erfindung an der der Längsnut gegenüberliegenden Begrenzungsfläche eine zweite, mit der ersten identische und dazu spiegelsymmetrisch angeordnete Längsnut ausgebildet ist, vereinfacht sich die Herstellung des Ausgangsmaterials. Die spiegelsymmetrisch angeordneten Längsnuten führen nämlich bei der spanlosen Formgebung eines derartig profilierten Band- bzw. Stabmaterials zu einer gleichmäßigen Materialverdrängung bzw. -verteilung.

Ausführungsbeispiele der Erfindung werden im folgenden anhand der Zeichnungen beschrieben. Es zeigen:
- Fig. 1: eine perspektivische Darstellung von einem Stück Stab-oder Bandmaterial, das zwei Kugellaufbahnen besitzt;
- Fig. 2: eine perspektivische Darstellung von einem Stück Stab-oder Bandmaterial, das zwei V-förmige Kreuzrollenlaufbahnen besitzt;
- Fig. 3: eine prinzipielle Anordnung der Profilrollen einer Biegeeinrichtung und
- Fig. 4: einen Teilschnitt durch ein aus erfindungsgemäßem Ausgangsmaterial hergestelltes Wälzlager, das in einer Umgebungskonstruktion angeordnet ist.

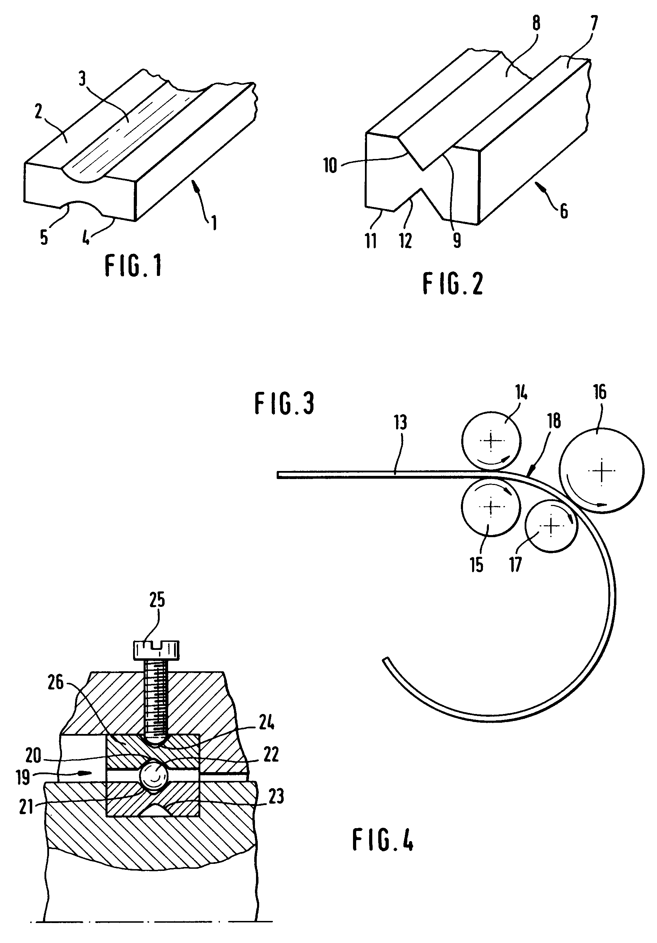

Das in Figur 1 dargestellte Stück Stab- oder Bandmaterial 1 weist an einer Begrenzungsfläche 2 eine Längsnut in Form einer Kugellaufbahn 3 auf, und an der gegenüberliegenden Begrenzungsfläche 4 eine zweite Längsnut in Form einer Kugellaufbahn 5, die mit der ersten identisch ist und spiegelsymmetrisch dazu liegt.

Das Stück Stab- oder Bandmaterial 6 gemäß Figur 2 weist an einer Begrenzungsfläche 7 eine Längsnut in Form einer V-förmigen Kreuzrollenlaufbahn 8 auf mit gleich langen und rechtwinklig zueinander stehenden Schenkeln 9 und 10, und an der gegenüberliegenden Begrenzungsfläche 11 eine zweite, mit der ersten identische Längsnut in Form einer V-förmigen Kreuzrollenlaufbahn 12.

In Figur 3 ist eine Biegevorrichtung als Beispiel skizziert. Das beidseitig eine Längsnut in Form einer Wälzkörperlaufbahn aufweisende und auf Länge geschnittene Ausgangsmaterial 13 wird zunächst zwischen die Profilrollen 14 und 15 eingeführt und alsdann zwischen den Profilrollen 16 und 17 unter Bildung eines Bogens 18 hindurchgeführt, wodurch im Ergebnis ein sowohl als Innen- als auch als Außenlaufring verwendbarer Wälzlagerlaufring hergestellt ist.

Bei dem mit erfindungsgemäßem Ausgangsmaterial hergestellten Wälzlager 19 der Figur 4 weist jede Laufbahn 20 und 21 eine Zweipunktauflage für Kugeln 22 auf, wodurch die Radialkräfte von dem durch die jeweils gegenüberliegende Laufbahn 23 bzw. 24 geschwächten Ringquerschnitt weg in die dickeren Seitenbereiche geleitet werden. Mit der in radialer Richtung in die keine Kugeln 22 aufnehmende Laufbahn 24 hineinragenden Schraube 25 kann der offene Laufring 26 gehalten und das Lagerspiel eingestellt werden.

## Patentansprüche

1. Verfahren zur Herstellung eines Wälzlagers, dessen Laufringe jeweils durch Rundbiegen eines Abschnitts von Band- bzw. Stabmaterial (1, 6, 13) erzeugt werden, welches im wesentlichen einen rechteckigen Querschnitt und an einer Begrenzungsfläche (2, 7 bzw. 4, 11) eine Längsnut in Form einer Wälzkörperlaufbahn (3, 8 bzw. 5, 12) aufweist, **dadurch gekennzeichnet**, daß zur Vermeidung der Umrüstung der Biegevorrichtung und der Vorratshaltung von für Innenringe und Außenringe unterschiedlichem Ausgangsmaterial ein Band- bzw. Stabmaterial (1, 6, 13) verwendet wird, welches an der der genannten Längsnut gegenüberliegenden Begrenzungsfläche (4, 11 bzw. 2, 7) eine zweite, mit der ersten identische und dazu spiegelsymmetrisch angeordnete Längsnut aufweist.

2. Verfahren nach Anspruch 1, **dadurch gekennzeichnet**, daß jede Längsnut des verwendeten Band- bzw. Stabmaterials (1) als Kugellaufbahn (3, 5, 20, 21, 23, 24) mit Zweipunktauflage für Kugeln (22) ausgebildet ist.

3. Verfahren nach Anspruch 1, **dadurch gekennzeichnet**, daß jede Längsnut des verwendeten Band- bzw. Stabmaterials (6) als Kreuzrollenlaufbahn (8, 12) mit V-förmigem Querschnitt ausgebildet ist, wobei die V-Schenkel (9, 10) gleichlang sind und rechtwinkelig zueinander stehen.

## Claims

1. Method of making a rolling bearing whose race rings are made by bending round a cut-off piece of strip or bar material (1, 6, 13) of an essentially rectangular cross-section and comprising, on one limiting face (2, 7 or 4, 11), a longitudinal groove in the form of a rolling element raceway (3, 8 or 5, 12), characterized in that, to avoid the retooling of the bending equipment and the stocking of different starting materials for inner and outer rings, a strip or bar material (1, 6, 13) is used which, on the limiting face (4, 11 or 2, 7) opposite to the said longitudinal groove, comprises a second longitudinal groove which is identical to the first longitudinal groove and arranged as a mirror image thereto.

2. Method according to claim 1, characterized in that each longitudinal groove of the strip or bar material (1) is configured as a ball raceway (3, 5, 20, 21, 23, 24) with a two-point contact for balls (22).

3. Method according to claim 1, characterized in that each longitudinal groove of the bar or strip material (6) is configured as a cross roller raceway (8, 12) with a V-shaped cross-section, the sides (9, 10) of the V being of equal length and at right angles to each other.

## Revendications

1. Méthode de fabriquer un palier à roulement dont les bagues de roulement sont produites par cintrage d'un tronçon d'un matériau en feuillard ou en barre (1, 6, 13) qui a une section droite globalement rectangulaire et qui, sur une de ses surfaces de délimitation (2, 7 ou 4, 11), comprend une rainure longitudinale en forme d'une piste de roulement (3, 8 ou 5, 12) pour des corps roulants, caractérisée en ce que, pour ne pas avoir à rajuster le dispositif de cintrage et stocker des matériaux de départ différents pour des bagues internes et externes, on utilise un matériau en feuillard ou en barre (1, 6, 13) qui, sur sa surface de délimitation (4, 11 ou 2, 7) opposée à ladite rainure longitudinale, comprend une deuxième rainure longitudinale qui est identique à la première rainure et est agencée en image reflétée de celle-ci.

2. Méthode selon la revendication 1, caractérisée en ce que chacune des rainures longitudinales du matériau en feuillard ou en barre (1) est configurée sous la forme d'une piste de roulement (3, 5, 20, 21, 23, 24) à contact à deux points pour des billes (22).

3. Méthode selon la revendication 1, caractérisée en ce que chacune des rainures longitudinales du matériau en feuillard ou en barre (6) est configurée sous la forme d'une piste de roulement (8, 12) à section droite en V pour des rouleaux en croix, les bras de V (9, 10) ayant la même longueur et étant agencés à angle droit l'un par rapport à l'autre.
